# EUROPEAN PATENT SPECIFICATION

(11) **EP 2 077 939 B1**
(45) Date of publication and mention of the grant of the patent: **23.05.2012**
(21) Application number: 07826947.9
(22) Date of filing: 01.11.2007
(51) Int. Cl.: B32B 5/06, D04H 13/00

(54) **MULTI-LAYER NONWOVEN HAVING A PRINTED LAYER AND PRODUCTS MADE THEREFROM**
MEHRLAGIGER VLIESSTOFF MIT EINER BEDRUCKTEN LAGE UND DARAUS HERGESTELLTE PRODUKTE
NON-TISSÉ MULTICOUCHE AYANT UNE COUCHE IMPRIMÉE ET PRODUITS FAIT À PARTIR DE CELUI-CI

(30) Priority: 01.11.2006 US 591113
(43) Date of publication of application: 15.07.2009
(73) Proprietor: The Procter & Gamble Company, Cincinnati, OH 45202 (US)
(72) Inventor: LACEY, Martin Patrick, Amberley Village, Ohio 45236 (US); PRATT, Michael Sean, St. Bernard, Ohio 45217 (US); TRINKAUS, Michael Jan, 65812 Bad Soden (DE); SAWIN, Philip Andrew, Wyoming, Ohio 45215 (US)
(74) Representative: Kremer, Véronique Marie Joséphine
(86) International application number: PCT/IB2007/054440
(87) International publication number: WO 2008/053449

(56) References cited:
- EP-A- 0 128 667
- EP-A1- 1 295 711
- WO-A-03/043480
- WO-A-2004/092472
- WO-A-2005/075199
- US-A1- 2002 148 085
- US-A1- 2006 035 555
- DATABASE WPI Week 200134 Thomson Scientific, London, GB; AN 2001-321996 XP002471537 & JP 2001 081657 A (KURARAY CO LTD) 27 March 2001 (2001-03-27)

## Description

### FIELD OF THE INVENTION

The present invention relates generally to substrates including nonwoven substrates and, more specifically, to a nonwoven substrate comprising a multi-layer structure in which one of the layers includes printed indicia or colors, or both.

### BACKGROUND OF THE INVENTION

Consumers use a wide variety of substrate products including wet and dry disposable wipes, diapers, feminine protection products, and other substrate products, in a variety of applications. Such substrates products are constructed from substrate materials which may be cut and formed into a variety of configurations, depending on the desired end use of the product being manufactured. During manufacture, the web is cut to the desired size and shape and, if desired, joined to other materials or moistened with a lotion or other suitable substance.

In the case of wipe products, the wipes may be wet or dry wipes. During manufacture, a nonwoven or other suitable web is cut to the desired size and, if desired, moistened with a lotion or other suitable substance. The resulting wipe, whether wet or dry, is used by consumers to clean bodily exudates, such as urine, feces, or menses from babies, hospital patients, the infirm, women, etc. Such wipes also are used in home and institutional cleaning applications, such as for cleaning floors, sinks, tubs, and other fixtures or surfaces.

Nonwovens preferably have a number of advantageous properties. For example, for manufacturing purposes, the structural integrity and the uniformity of the web are considerations in order to minimize web breakage or other quality control issues. The feel and softness of the finished wipe are additional considerations, as is the flexibility or drape of the finished wipe.

Many nonwovens typically are disposed of after use. Thus in order to keep the costs down for the resulting end product, the manufacture of the nonwoven should be relatively cost-effective. The average consumer may have second thoughts about using a product that holds itself out as disposable if the cost per article is too high. Nevertheless, manufacturers as well as consumers may desire additional features that make the nonwovens and the end products more attractive to manufacturers, retailers, and purchasers. Unfortunately, cost considerations and the above-described desired physical properties often present a hindrance to incorporating additional features into the finished nonwoven and/or the resulting end product.

Moreover, because the web or other substrate used in nonwovens is often incorporated into products which are used to scrub surfaces (i.e. wipes) or used in skin-contact environments (i.e. wipes, diapers, feminine protection products), it may be difficult to add some attractive features, such as text, graphics, colors or other indicia, and still maintain the desired degree of image integrity and/or prevent or minimize the potential for transfer of the inks and/or pigments used in creating the graphics or other indicia to the skin. Further, it may be difficult to add these desired features without unduly hampering the drape, flexibility, and other desirable physical properties of the nonwoven.

For instance, EP 0128667 A2 discloses an entangled composite fabric having a sharply delineated pattern on the upper surface of the composite fabric. WO 2004/092472 A2 discloses multi-layered nonwovens for use as an absorbent material in the field of surface cleaning or personal hygiene prepared by combining a fibrous layer, a layer of cellulose pulp, and another fibrous layer by hydroentangling. It is mentioned that the multi-layered nonwovens may subsequently be printed. EP1295711 A1 discloses two-layered nonwovens in particular for use as a secondary topsheet in disposable absorbent articles, prepared by providing a first layer printed on at least one of its surfaces, providing fibers on the first layer to form a second layer, and applying bending means such as a latex binder to at least one and preferably both of the outer surfaces, said latex binder stabilizing the structure and the printing, thereby reducing color-bleeding and rub-off. It is mentioned that color-bleeding and rub-off can be further reduced if the first layer is printed on that surface on which the fibers forming the second layer are provided.

Thus, it would be desirable to provide nonwovens with text, graphics, or colors, and to provide methods for making such nonwovens.

### SUMMARY OF THE INVENTION

Nonwovens are used in many product applications including diapers, wipes, feminine protection products and the like. In order to make these products most useful to consumers, such products will frequently include a number of features that increase their utility, ease of use, appropriateness of use, ancillary benefits, etc. to best meet the needs of the consumers.

One example of a feature that some manufacturers, retailers and consumers may find desirable is the addition of text, graphics, or colors to the nonwoven and/or to the resulting end product. In accordance with the disclosed example, constructing a printed or colored nonwoven by hydroentangling a printed or colored layer with a layer of nonwoven substrate may offer certain advantages over the existing state-of-the-art printed nonwovens. For example, nonwoven-based products, such as wipes, and absorbent articles are often used for cleaning and/or scrubbing and/or for skin-contact purposes. In such applications, it can be advantageous that the printed indicia and/or colors be arranged so as to not be disposed at the surface of the nonwoven itself. Thus, it may be desirable to join a printed or colored layer to another layer such that the printed or colored layer is not disposed on the outermost surfaces of the resulting nonwoven.

For example, some nonwoven-based products, such as wipes, are often used for cleaning and/or scrubbing. Thus, placing the printed or colored elements inside the nonwoven may provide increased abrasion-resistance of the printed elements. Specifically, placing the printed or colored elements away from the surface of the nonwoven helps to retain the integrity of the image or the color, even in circumstances where the surface of the nonwoven is disrupted due to scrubbing or other surface abrasion.

Separately, for skin-contact products such as absorbent articles and wipes intended for use on the body (for example, baby wipes, cosmetic wipes, topical-applicator wipes, and other such products), placing the printed or colored elements internally or within the nonwoven reduces the potential transfer to the skin of the inks, dyes, pigments and the like used in the printing or coloring process. This aspect may offer particular advantages in the context of baby wipes, where safety concerns can be particularly important to consumers.

Additionally, in accordance with the disclosed example, joining the printed or colored layer to a nonwoven layer by hydroentanglement may offer certain advantages. Although it may be contemplated to bond a printed layer to a nonwoven layer as a means of removing the printed image from the outermost surface of the resulting nonwoven using conventional bonding methods such as adhesive-bonding or thermal-bonding, these alternative bonding techniques typically impart the finished nonwoven with undesirable properties, such as increased stiffness, reduced drapability, and reduced flexibility. Nonwoven products based on stiff and/or inflexible nonwovens can be undesirable to consumers, particularly for skin-contact products such as wipes, and absorbent articles. Furthermore, these conventional bonding techniques may have the disadvantage of requiring the use of adhesives and/or specific thermoplastic polymeric additives to achieve the required lamination. These additional components may add unnecessary cost and complexity to the manufacturing of the nonwovens, and these components have the potential to interact negatively with applied lotions or other treatments.

In accordance with an aspect of the invention, a multi-layer nonwoven may comprise at least one layer that is printed, or colored, or both, bonded to a nonwoven by hydroentanglement. In further accordance with a preferred form, a multi-layered nonwoven may be incorporated into a wipe or absorbent article made from nonwovens, with the nonwoven or the end product having text, graphics, images, colors, or any other suitable indicia.

In accordance with another aspect of the invention, the printed layer may comprise a pulp material, and the indicia may include text, graphics, or both, and also may include colors. The printed layer may be hydroentangled to a synthetic layer, such as a fibrous layer. The layer or layers of synthetic fibers may comprise discrete staple synthetic fibers, essentially continuous filaments, or combinations thereof. Such layers of synthetic fibers may be formed by many forming processes known to those skilled in the art, such as carding, wet-laying, air-laying, or spunmelt formation. The printed layer may be hydroentangled to one or more other layers, such as the synthetic layer, in a first direction and then in a second direction. The resultant nonwoven may be hydroentangled once again, in either the first or second directions, or in a third direction.

The resulting nonwoven may form a web, and the web may be dried. The dried web may be used in the construction of a nonwoven-based absorbent article product such as a disposable diaper or feminine protection product. The web also may be used as a wipe product in the dry state. If desired, the web may be moistened with a lotion or other suitable substance or preparation.

In accordance with an aspect of the invention, the at least one layer of synthetic fibers may comprise staple fibers of polypropylene and rayon. The ratio of the polypropylene fibers to the rayon fibers may be about 60% to 40%. The polypropylene fibers may have a denier of about 1.5 and a length of about 1.50 inches (38 mm), and wherein the rayon fibers have a denier of about 1.5 and a length of about 1.57 inches (40 mm).

In accordance with another aspect of the invention, a multi-layered nonwoven having indicia may comprise a pair of outer layers, each of the outer layers comprising a carded web of staple or continuous fibers, and an inner layer disposed between the outer layers and having printed indicia. The inner layer is secured to at least one of the outer layers by hydroentanglement.

In accordance with a further aspect of the invention, a multi-layered nonwoven having indicia comprises a pair of outer layers, each of the outer layers formed of a web of staple or continuous fibers comprising a mix of polypropylene fibers and rayon fibers, a printed center layer disposed between the outer layers and having indicia, the center layer comprising a pulp material, and a bond formed by hydroentanglement to secure the printed the center layer to each of the outer layers.

In accordance with a further aspect of the invention, a method of manufacturing a nonwoven comprises the steps of providing a pair of outer layers comprising carded webs, providing a pulp inner layer having printed indicia, positioning the inner layer between the outer layers, passing the outer layers and the inner layer together through a hydroentangling system to secure the inner layer to each of the outer layers to form a web, and drying the web.

### BRIEF DESCRIPTION OF THE DRAWINGS

While the specification concludes with claims particularly pointing out and distinctly claiming the subject matter that is regarded as the present invention, it is believed that the invention will be more fully understood from the following description taken in conjunction with the accompanying drawings. Some of the figures may have been simplified by the omission of selected elements for the purpose of more clearly showing other elements. Such omissions of elements in some figures are not necessarily indicative of the presence or absence of particular elements in any of the exemplary embodiments, except as may be explicitly delineated in the corresponding written description. None of the drawings are necessarily to scale.
Figure 1 is a plan view of a multi-layer nonwoven having a printed inner layer assembled in accordance with the teachings of a disclosed example of the present invention and taking the form of a wipe.
Figure 2 is an enlarged fragmentary cross-sectional view of the nonwoven of Figure 1 and illustrating a two layer nonwoven prior to bonding the layers to one another.
Figure 3 is an enlarged cross-sectional view of the two layer nonwoven of Figure 2 after bonding the layers to one another.
Figure 4 is an enlarged fragmentary cross-sectional view similar to Figure 2 but illustrating a three layer nonwoven prior to bonding the layers to one another.
Figure 5 is an enlarged cross-sectional view of the three layer nonwoven of Figure 4 after bonding the layers to one another.
Figure 6 is a schematic illustration of the nonwoven undergoing an exemplary hydroentanglement bonding process.
Figure 7 is a schematic illustration similar to Figure 4 and illustrating the nonwoven undergoing an exemplary second pass through the hydroentanglement bonding process.
Figure 8 is a schematic illustration similar to Figures 6 and 7 and illustrating the nonwoven undergoing an exemplary third pass through the hydroentanglement bonding process.
Figure 9 is a wearable garment on the form of a diaper assembled in accordance with the teachings of the present invention and incorporating a printed layer.
Figure 10 is a wearable garment on the form of a feminine protection product assembled in accordance with the teachings of the present invention and incorporating a printed layer.
Figure 11 is a nonwoven product in the form of a mitt and assembled in accordance with the teachings of the present invention and incorporating a printed layer.
Figure 12 is a nonwoven product in the form of a bib and assembled in accordance with the teachings of the present invention and incorporating a printed layer.

### DETAILED DESCRIPTION OF THE INVENTION

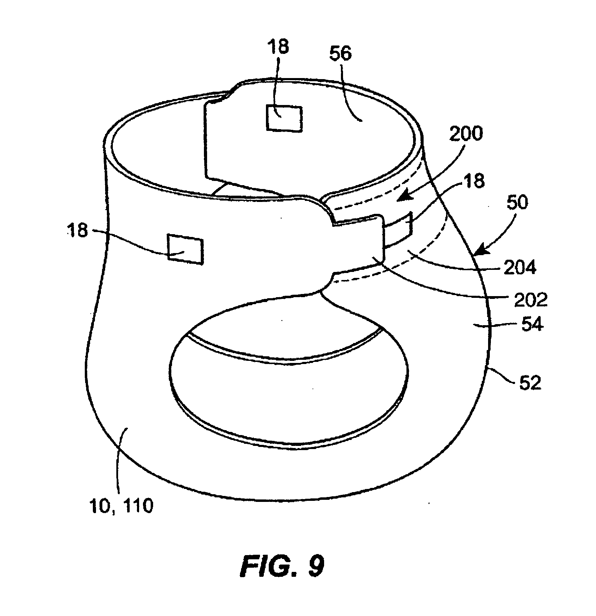

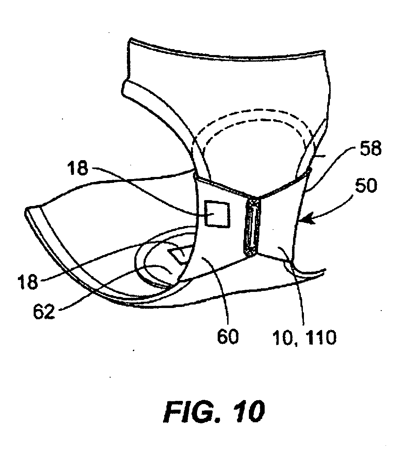

As used herein, the term "absorbent article" refers to devices which absorb and contain body exudates, and, more specifically, refers to devices which are placed against or in proximity to the body of the wearer to absorb and contain the various exudates discharged from the body. The term "disposable" is used herein to describe absorbent articles which are not intended to be laundered or otherwise restored or reused as an absorbent article (i.e., they are intended to be discarded after a single use and, preferably, to be recycled, composted or otherwise disposed of in an environmentally compatible manner). A "unitary" absorbent article refers to an absorbent article which is formed of separate parts united together to form a coordinated entity so that it does not require separate manipulative parts like a separate holder and liner. As used herein, the term "diaper" refers to an absorbent article generally worn by infants and incontinent persons that is worn about the lower torso of the wearer. It should be understood, however, that the present invention is also applicable to other absorbent articles such as incontinent briefs, incontinent undergarments, diaper holders and liners, feminine hygiene garments, medical wraps, bibs, bandages, and the like. Exemplary absorbent articles are shown in Figures 9 and 10, described in greater detail below.

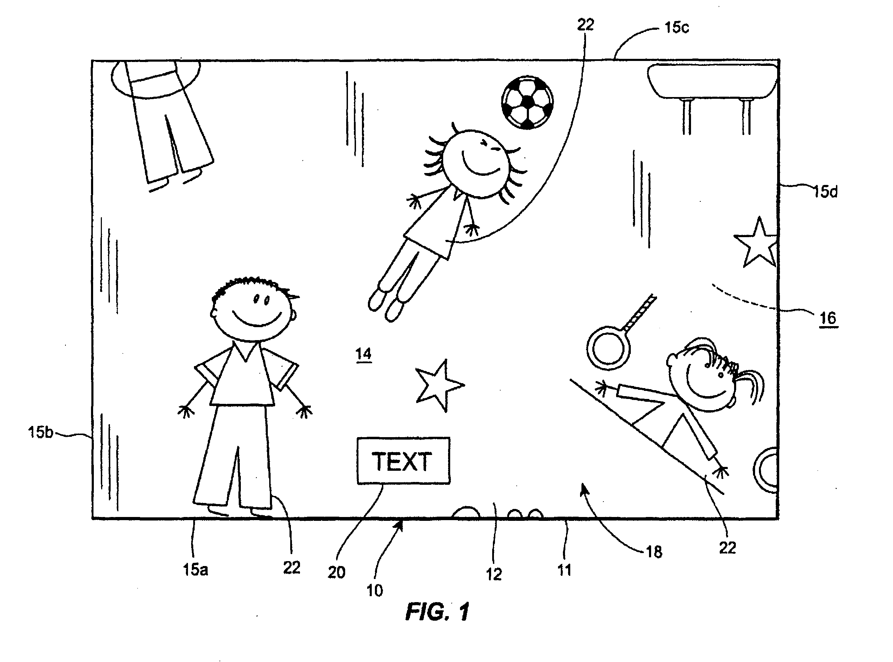

Referring now to the drawings, Figure 1 illustrates a nonwoven 10 assembled in accordance with the teachings of the present invention. The nonwoven 10 is formed of a generally planar sheet or web 12 and includes an upper surface 14, a lower surface 16 (obscured in Figure 1), and a plurality of edges 15a, 15b, 15c, and 15d. The relative dimensions of the edges 15a-15d, and hence the overall shape of the nonwoven 10 as shown in Figure 1 is exemplary only. In accordance with the disclosed example, the nonwoven 10 includes indicia 18, which may take the form of text 20 or graphics 22, or both. Other forms of indicia 18 may be contemplated. The text 20 may take the form of messages, logos, brand names, instructions, or any other suitable text. The graphics 22 may take the form of logos, cartoon characters, pictures, drawings, or any other suitable graphics. Those of skill in the art may contemplate still further exemplary forms for the text 20 and the graphics 22. In the example of Figure 1, the nonwoven 10 takes the form of a wipe 11.

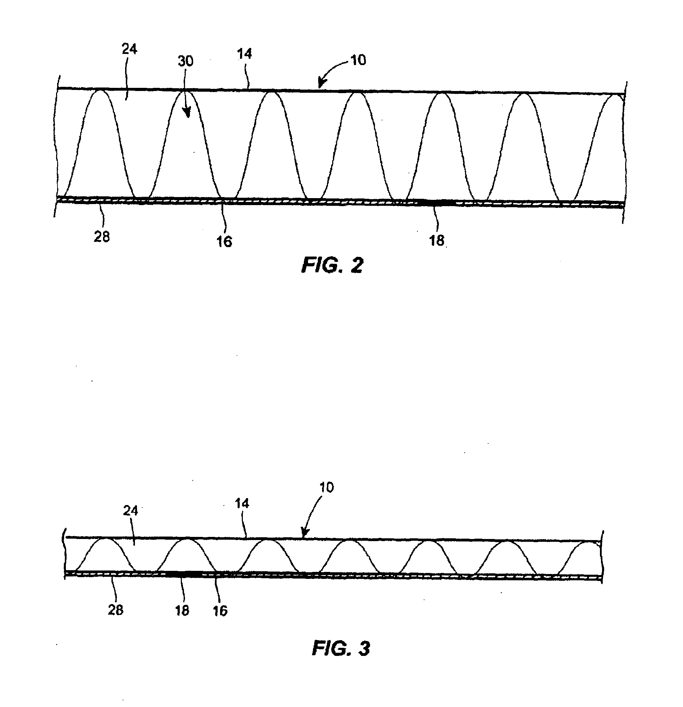

Referring now to Figures 2 and 3, the nonwoven 10 is shown in cross-section. For ease of illustration, the thickness of the nonwoven 10 has been exaggerated. The nonwoven 10 includes upper and lower surfaces 14, 16, and is formed of multiple layers, including an upper layer 24 and a lower layer 28 forming an unbonded two layer sandwich 30 (Fig. 2). In Figure 2, the layers 24 and 28 are shown prior to being bonded together by hydroentanglement. In the completed nonwoven 10 of Figure 3, the upper and lower layers 24 and 28 have been bonded or connected together using hydroentanglement. Therefore, the upper and lower layers 24 and 28 have been compressed relative to their initial state, as will be explained in further detail below. Also, the lower layer 28 includes the indicia 18 discussed above with respect to Figure 1. Consequently, after hydroentanglement, the indicia 18 is visible through the upper layer 24 as can be seen when viewing Figure 1. The lower layer 28 also may be partially or completely colored.

Referring again to Figure 2, the layers 24 and 28 are shown prior to hydroentanglement. For ease of illustration, the thickness of the various layers has been exaggerated. The layer 24 is a web made of staple or continuous fibers. In the example of Figure 2, the layer may be formed of a blend of high opacity polypropylene fibers (HOOP) and rayon fibers. Alternatively, other fibers of the type commonly employed in this technology may be used, or continuous fibers of the type commonly employed in spunbond technology may be used. For example, such other fibers may include, by way of example rather than limitation, regular polypropylene fibers, polyester fibers, cotton fibers, or bi-component fibers. The fibers may be natural fibers and may include cellulosic natural fibers, such as fibers from hardwood sources, softwood sources, or other non-wood plants. The natural fibers may comprise cellulose, starch and combinations thereof. Non-limiting examples of suitable cellulosic natural fibers include, but are not limited to, wood pulp, typical northern softwood Kraft, typical southern softwood Kraft, typical CTMP, typical deinked, corn pulp, acacia, eucalyptus, aspen, reed pulp, birch, maple, radiata pine and combinations thereof. Other sources of natural fibers from plants include, but are not limited to, albardine, esparto, wheat, rice, corn, sugar cane, papyrus, jute, reed, sabia, raphia, bamboo, sidal, kenaf, abaca, sunn, rayon (also known as viscose), lyocell, cotton, hemp, flax, ramie and combinations thereof. Yet other natural fibers may include fibers from other natural non-plant sources, such as, down, feathers, silk, cotton and combinations thereof. The natural fibers may be treated or otherwise modified mechanically or chemically to provide desired characteristics or may be in a form that is generally similar to the form in which they can be found in nature. The fibers may be synthetic fibers and may include, but not limited to, those selected from the group consisting of polyesters (e.g., polyethylene terephthalate), polyolefins, polypropylenes, polyethylenes, polyethers, polyamides, polyesteramides, polyvinylalcohols, polyhydroxyalkanoates, polysaccharides, and combinations thereof. Further, the synthetic fibers can be a single component (i.e., single synthetic material or mixture makes up entire fiber), bi-component (i.e., the fiber is divided into regions, the regions including two or more different synthetic materials or mixtures thereof and may include co-extruded fibers and core and sheath fibers) and combinations thereof. Any or all of the synthetic fibers may be treated before, during, or after manufacture to change any desired properties of the fibers. In the instance where it is desirable that the substrate be biodegradable, as in products intended to be flushed down the toilet, the fibers may be comprised of rayon, cotton, or other biodegradable fibers. The fibers may also have various cross-sectional shapes, including but not limited to round, rectangular, oval, tri-lobal, or other cross-sectional shapes.

Referring still to Figure 2, the layer 28 (which has indicia 18 as discussed above) is disposed adjacent the layer 24. It will be noted that in the state illustrated in Figure 2, the layer 24 may be uncompressed, such that the web or substrate is relatively fluffy. The layer 28 may be formed from a thin paper or other pulp material. In accordance with the disclosed example, the layer 28 may be formed of a single ply of, for example, a printed multi-ply toilet paper of the type that is commercially available. Alternatively, a single ply of a printed paper towel of the type that is commercially available may be used for the layer 28, and still other forms of printed paper or pulp products may be used for the layer 28. The layer 28 may be printed in a prior processing step (not shown) of the type commonly employed in the manufacture of printed toilet paper. In accordance with the disclosed example, the layer 28 is manufactured with the addition of wet strength resins of the type commonly used in the manufacture of toilet paper, tissues, or paper towels. It will be understood that the indicia 18, such as the above-described text 20, graphics 22, or both, will be carried by the layer 28. Further, the indicia 18 may be printed on the layer 28 using known printing processes, such as printing processes normally employed to print indicia on toilet paper. For example, the indicia 18 may be printed using any suitable printing process, such as ink jet printing, lithography, flexography, gravure, screen printing, letterpress, plateless printing, or any other suitable process. In the example of Figure 2, the two layers 24 and 28 are shown disposed adjacent one another to form the unbonded or unconnected two layer sandwich 30.

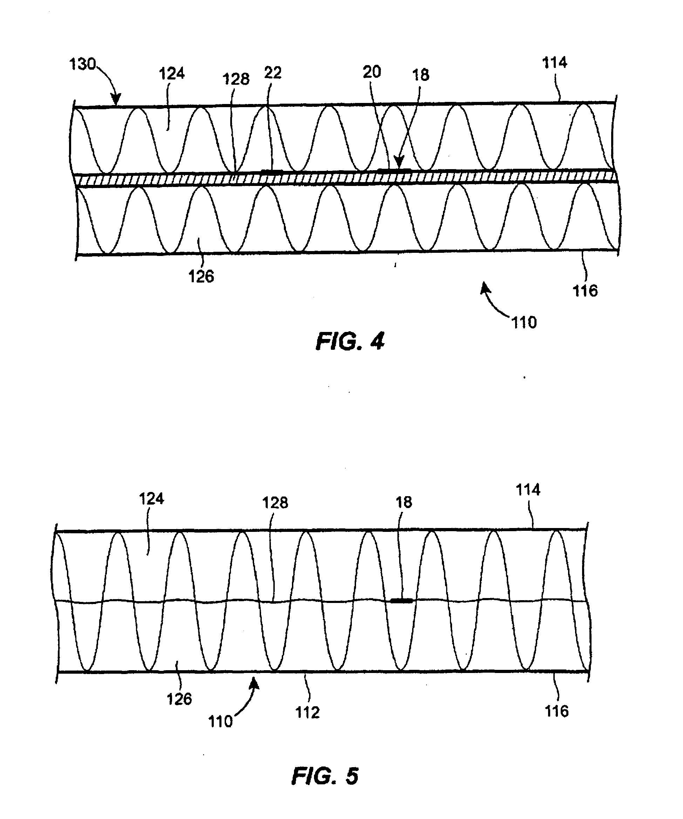

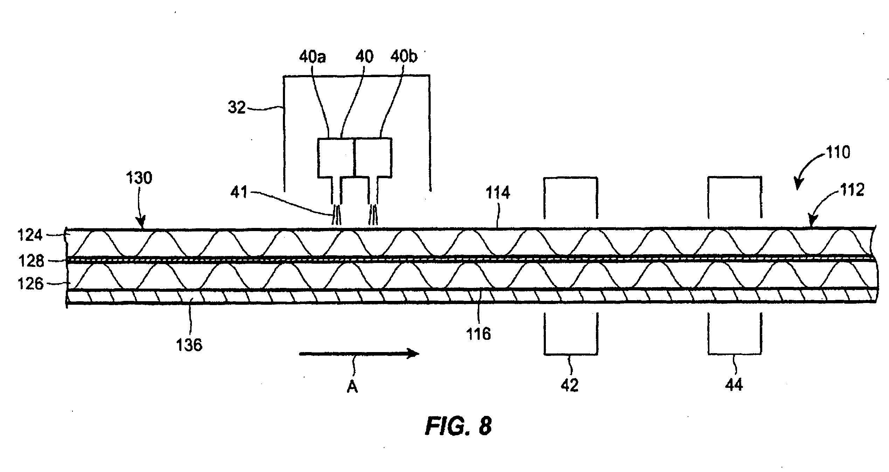

Referring now to Figures 4 and 5, a nonwoven 110 assembled in accordance with the teachings of another disclosed example is shown. Again, for ease of illustration the thickness has been exaggerated. The nonwoven 110 includes upper and lower surfaces 114, 116, and is formed of three layers including an upper layer 124, a lower layer 126, and an inner layer 128. In the completed nonwoven of Figure 5, the upper and lower layers 124, 126, and the inner layer 128 have been bonded or connected together using hydroentanglement. Therefore, in the view of Figure 5, the upper and lower layers 124, 126 have been compressed relative to their initial state, as will be explained in further detail below. Also, the inner layer 128 includes the indicia 18 discussed above with respect to Figure 1. Consequently, after hydroentanglement, the indicia 18 may be visible through one or both of the layers 124, 126. The layer 128 also may be partially or completely colored. Further, in the example of Figures 4 and 5, the upper and lower layers 124 and 126 may be formed of a blend of high opacity polypropylene fibers (HOPP) and rayon fibers. Alternatively, other fibers of the type commonly employed in this technology may be used, or continuous fibers of the type commonly employed in spunbond technology may be used. The fibers may be any of the fibers previously described above. For example, such other fibers may include, by way of example rather than limitation, regular polypropylene fibers, polyester fibers, cotton fibers, or bi-component fibers. The fibers may also have various cross-sectional shapes, including but not limited to round, rectangular, oval, tri-lobal, or other cross-sectional shapes. The stacked layers form a three layer sandwich 130, and after hydroentanglement (described below with respect to Figure 8), the sandwich 130 will form a web 112.

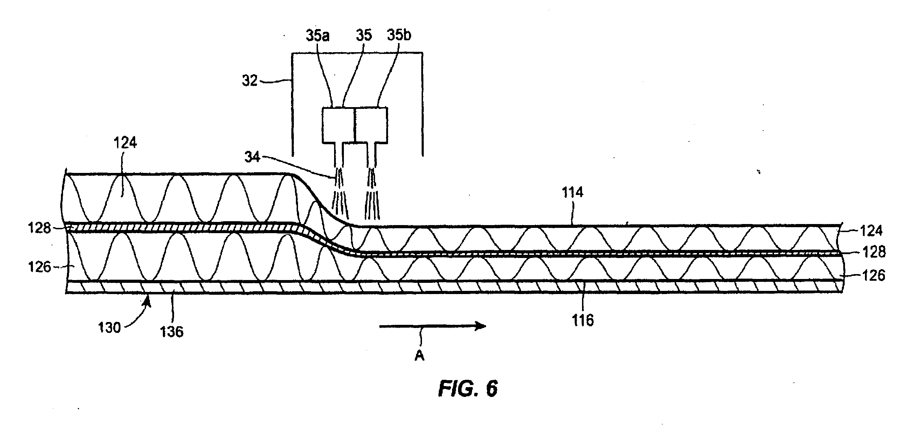

Referring now to Figure 6, the three layer sandwich 130 is shown being routed through a hydroentanglement machine 32 in a direction generally indicated by the reference arrow A. The two layer sandwich 30 shown in Figures 2 and 3 may be hydroentangled in the same or similar manner. The hydroentanglement machine 32 directs pressurized streams or jets 34 of water toward the sandwich 30. Although only a single set of jets 34 is shown, it will be understood that the jets 34 may include a plurality of streams or jets caused by individual water nozzles spaced apart in a direction generally transverse to the direction A, such that a plurality of the water jets extends across a width of the sandwich 130. The hydroentanglement machine 32 may include a plurality of stations, with a first station 35 shown in Figure 6. Also, it will be understood that the first station 35 may include a first row of water jets 35a and a second row of water jets 35b spaced apart along the direction A. The sandwich 130 may be supported by a support 136. The support 136 may be a web or other suitable belt, or any other suitable structure. Further, it will be understood that the support 136 need not be continuous. Upon passing through the first station 35 of the hydroentanglement machine 32, the sandwich 130 will be compressed as the fibers of the upper layer 124 become entangled with the inner layer 128. The lower layer 126 also may be compressed slightly during this first pass through the hydroentanglement process, although the lower layer 126 may not get compressed quite as much as the upper layer 124.

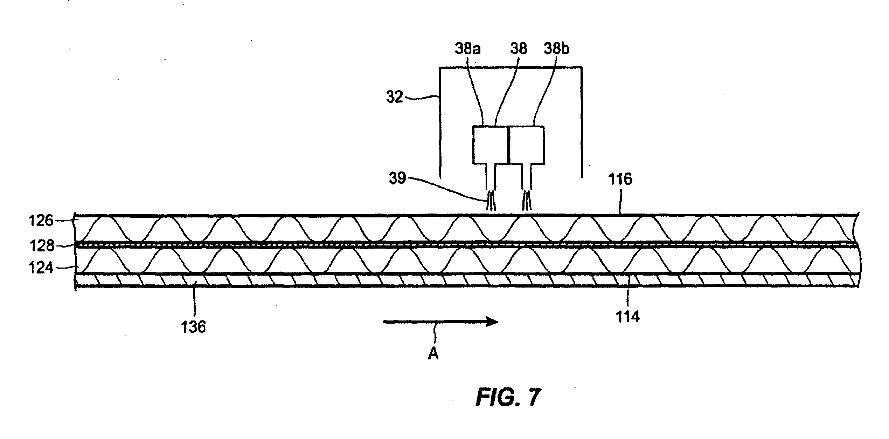

Referring now to Figure 7, the sandwich 130 is next shown being routed through a second station 38 of the hydroentanglement machine 32, again in the direction A and presumably downstream of the first station 35. As shown in Figure 7, the sandwich 130 is oriented differently such that the water jets at the second station 38 are directed at the lower layer 126. It will be understood that the sandwich 130 may be turned over by routing the sandwich over a roller (not shown). Alternatively, the sandwich 30 may be turned over by using other conventional means, or the orientation of the second station 38 may be flipped over relative to the orientation of the first station 35. In any event, water jets 39 at the second station 38 are directed in a different and generally opposite direction relative to the sandwich 130 compared to the direction of the water jets 34 at the first station 35. In other words, the water jets 39 are now directed toward the lower layer 126 rather than at the upper layer 124. The arrangement of the individual jets may be similar to those discussed above with respect to Figure 6, such that the jets may extend across a width of the sandwich 130. Further, the second station 38 may have a first set of jets 38a and a second set of jets 38b. Upon passing through the second station 38 of the hydroentanglement machine 32, the sandwich 130 will now be further compressed, as the fibers of both the upper and lower lays 124 and 126 are now further entangled with the fibers of the inner layer 128.

Referring now to Figure 8, the sandwich 130 is next shown being routed through a third station 40 of the hydroentanglement machine 32, again in the direction A and presumably downstream of the prior stations. As shown in Figure 8, the sandwich 130 is once again oriented differently, such that the water jets at the third station 38 are again directed at the upper layer 124. Water jets 41 at the third station 40 may be directed in a direction generally the same as at the first station 35. Again, the arrangement of the individual jets may be similar to those discussed above with respect to Figures 6 and 7. Further, the third station 40 may have a first set of jets 40a and a second set of jets 40b. Upon passing through the third station 40 of the hydroentanglement machine 32, the sandwich 130 is now fully compressed into the web 112 of the nonwoven 110, with the fibers of both the upper and lower layers 124 and 126 now further entangled with the fibers of the inner layer 128. The resulting web 112 is next fed into a dryer 42.

It can be appreciated by one of ordinary skill in the art that the hydroentanglement stations 35, 38 and 40 need not be discrete hydroentanglement stations but can also be the same hydroentanglement station wherein the web 130 may be wound and un-wound between subsequent hydroentanglements.

In the example of Figures 6-8, the water jets are oriented in a direction generally perpendicular to the plane of the sandwich or web. Other orientations may be chosen.

In the event the dried web is to be made into a wet wipe product, the web 112 may next be fed into a moistening station 44. The moistening station 44 may be configured to add any sort of lotions, etc., conventionally added to wet wipe products. Whether wet or dry, the web 112 may be cut and trimmed as necessary in order to make a nonwoven 110 having the desired size.

Referring now to Figure 9, the nonwovens 10 or 110 may be incorporated into an absorbent article or other wearable garment 50. In the example of Figure 9, the wearable garment 50 takes the form of a diaper 52. The indicia 18 on the nonwoven 10 or 110 may be positioned within the diaper 52 so as to be visible on an outside surface 54, on an inside surface 56, or on any other suitable surface on the diaper 52. The diaper 52 may include an absorbent layer of the type commonly employed in the art, and the diaper 52 may be conventional in all other respects. In the embodiment of Figure 9, the diaper 52 includes a fastening system 200 comprising a hook and loop type fastener, or any other suitable fastener, such as a tape fastener. As used herein, the term "hook and loop type fasteners" refers to fastening means comprising a "hook" component (hereinafter referred to as an "engaging component") and a complementary loop component (hereinafter referred to as a "landing component"). The term "hook" is used to designate a material having engaging elements. Thus, the hook fastening material may also be referred to as a male fastener. It should also be understood that the use of the term "hook" should be non-limiting in the sense that the engaging elements may comprise any shapes as are known in the art so long as they are adapted to engage a complementary landing component. The fastening system 200 may include a component 202 that is securable to a landing zone 204. In the example of Figure 9, at least a portion of the landing zone 204 may include the indicia 18. The nonwoven may be desirable in the application to the landing zone where iterative attachment and removal of the "hook" component to the nonwoven of the landing zone would otherwise disrupt the indicia 18 included on the landing zone, if the indicia were printed on the surface of the nonwoven rather than incorporated into the nonwoven as described.

Referring now to Figure 10, the absorbent article or wearable garment 50 may take the form of a feminine protection product 58, with the nonwoven 10 or 110 incorporated into the feminine protection product 58. The indicia 18 on the nonwoven 10 or 110 may be positioned within the feminine protection product 58 so as to be visible on an outside surface 60, on an inside surface 62, or on any other suitable surface on the feminine protection product 58. The feminine protection product 58 may include an absorbent layer of the type commonly employed in the art, and the feminine protection product 58 may be conventional in all other respects.

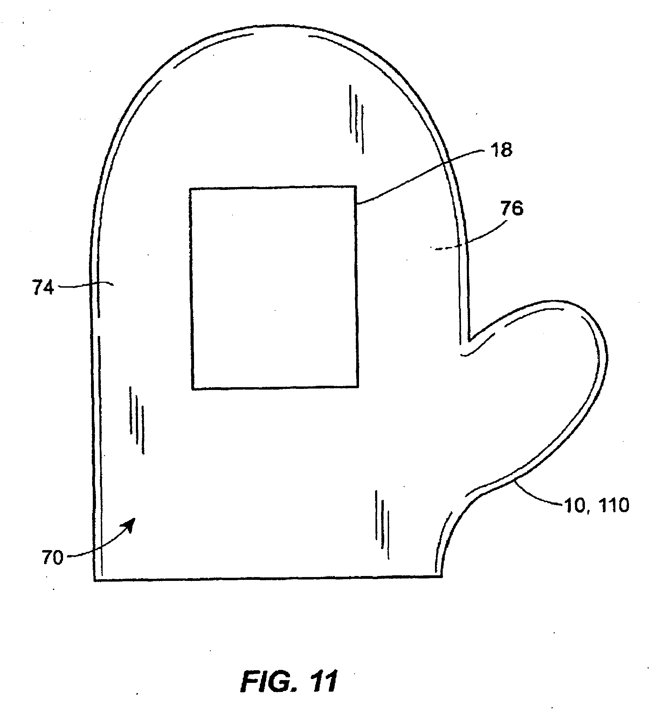

Referring now to Figure 11, the nonwovens 10 or 110 may be incorporated into a mitt 70. The indicia 18 on the nonwoven 10 or 110 may be positioned on the mitt 70 so as to be visible on an outside surface 74, on an inside surface 76, or on any other suitable surface on the mitt 70. The mitt 70 may be conventional in all other respects.

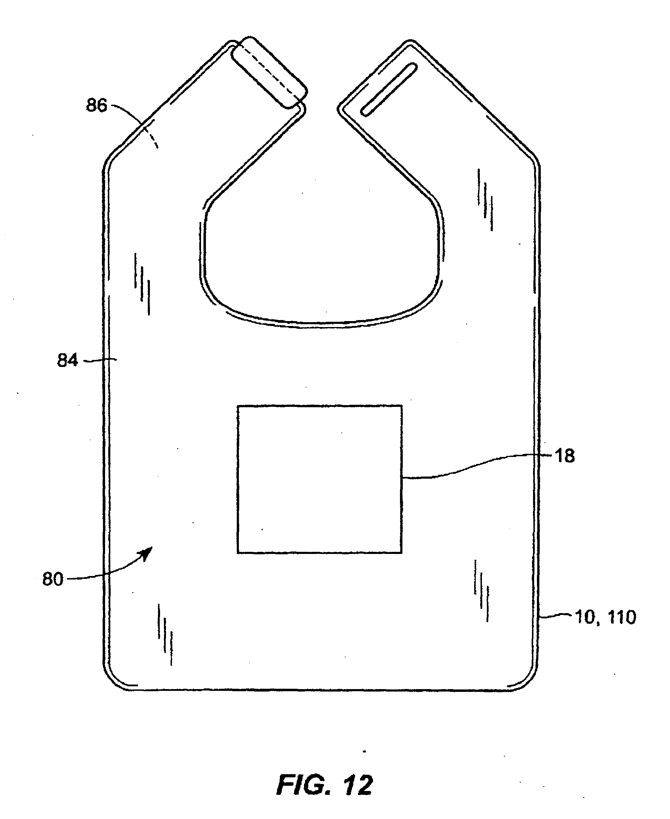

Referring now to Figure 12, the nonwovens 10 or 110 may be incorporated into a bib 80. The indicia 18 on the nonwoven 10 or 110 may be positioned on the bib 80 so as to be visible on an outside surface 84, on an inside surface 86, or on any other suitable surface on the bib 80. The bib 80 may be conventional in all other respects.

### QUANTITATIVE EXAMPLE

The fibers for the carded webs for use in a test batch are pre-mixed by hand in a box. The ratio of high opacity polypropylene (HOPP) to rayon is 60% HOPP to 40% rayon, or a ratio of 3:2. The HOPP fibers may be obtained from FIBER VISIONS, Product No. 6801060330211. The fibers are 1.5 denier (1.7 dtex), white, having a thickness of 0.060 inches (1.5 mm) and a cut length of 1.5 inches (38mm). The rayon fibers may be obtained from Liberty Fibers Corp., type 8191, with dull regular luster. The denier for the rayon fibers is 1.50 dpf (1.7 dtex) cut to a length of 1.57 inches (40mm). The fibers are used to make the carded webs.

The fiber mixture is fed using a feed system manufactured by Befama. The pre-blended fibers are fed into the system and formed into carded webs, each web having a basis weight of approximately 15 grams per square meter.

The carded webs are fed onto foam boards and cut to length with scissors. A sheet of 4-color printed UK Charmin Ultra single ply tissue is used, having a basis weight of 21.8 grams per square meter. The tissue is laid on top of one of the carded webs. Another carded web sample is then placed on top and the edges were trimmed to remove excess web.

The web "sandwiches" are fed individually into a Fleissner Aqua Jet hydroentangler system. The belt speed is 10 m/min. The first jet head encountered by the web contains a jet strip with 40 holes per inch (16 holes per cm), arranged in a single row. The holes are 0.12 mm in diameter and the pressure is 35 bar. The second jet is operated at 70 bar and contains 40 holes per inch (16 holes per cm), but the holes are 0.10 mm in diameter. Each web is passed through the system 3 times alternating the side that faces the jets each time.

Following the hydroentanglement process, the webs are dried in a Pyradia Thru Air Dryer. The webs are placed onto the belt and then fed into the dryer (zone 1 set at 110°C and zone 2 was set at 115°C). The webs are dried for approximately 5 minutes and then removed from the dryer.

In accordance with the disclosed example, on the resulting nonwoven 10, whether wet or dry, the indicia 18 on the inner layer 28 is visible through one or both of the outer layers 24, 26. In the Quantitative Example discussed above, the resulting nonwoven 10 exhibited good image integrity/resolution as well as good web integrity and overall uniformity. Also, when the nonwoven 10 is assembled in accordance with the teachings of the disclosed example, any subsequent printing steps may be eliminated, resulting in greater production efficiencies. As a possible alternative embodiment, the upper and lower layers 24, 26, along with the inner layer 28, may be joined by stitching, embossing, or possibly by a suitable adhesive. Also, although the disclosed examples illustrate adjacent layers coupled or connected directly to one another, the layers also may suitably be coupled together with one or more intervening layers disposed between the printed layer and one or more of the carded webs.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm.

The citation of any document is not to be construed as an admission that it is prior art with respect to the present invention.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A nonwoven formed from multiple layers and having a printed layer and comprising:
a fibrous layer; and
a printed layer disposed adjacent the fibrous layer;
wherein the printed layer is bonded to the fibrous layer by hydroentanglement such that the printed layer is not disposed on the outermost surfaces of the resulting nonwoven.

2. The nonwoven according to claim 1, wherein the printed layer has indicia.

3. The nonwoven of claim 1, wherein the printed layer comprises a pulp material.

4. The nonwoven of claim 2 wherein the indicia includes text or graphics.

5. The nonwoven of claim 1 wherein at least a portion of the printed layer is colored.

6. The nonwoven of claim 1 wherein the fibrous layer comprises synthetic fibers formed of staple fibers.

7. The nonwoven of claim 1 wherein the fibrous layer is formed of spun fibers.

8. The nonwoven of claim 1 wherein the fibrous layer is formed of continuous fibers.

9. The nonwoven according to any of the preceding claims, wherein the fibrous layer comprises polypropylene fibers and rayon fibers in a ratio of 3 :2.

10. An absorbent product comprising:
a wearable garment having an absorbent layer; and
the nonwoven of claim 1 .

11. The nonwoven of claim 1 wherein the nonwoven is a wipe.

12. The absorbent product of claims 10, wherein the absorbent article is a diaper comprising:
an absorbent layer;
a fibrous layer;
a fastener securable to a landing zone; and
a printed layer disposed adjacent the fibrous layer, the printed layer having indicia, at least a portion of the indicia disposed in the landing zone;
wherein the printed layer is bonded to the fibrous layer by hydroentanglement.

13. A method of manufacturing a nonwoven according to claims 1 to 9 comprising the steps of:
providing a fibrous layer;
providing a pulp layer having printed indicia;
positioning the pulp layer adjacent the fibrous layer, and
passing the layers together through a hydroentangling system to secure the layers to one another.

## Patentansprüche

1. Vlies, das aus mehreren Schichten gebildet ist und eine bedruckte Schicht aufweist und Folgendes umfasst:
eine Faserschicht und
eine bedruckte Schicht, die angrenzend an die Faserschicht angeordnet ist,
wobei die bedruckte Schicht durch Wasserstrahlverfestigung so an die Faserschicht gebunden ist, dass die bedruckte Schicht nicht an den äußersten Oberflächen des resultierenden Vlieses angeordnet ist.

2. Vlies nach Anspruch 1, wobei die bedruckte Schicht Zeichen aufweist.

3. Vlies nach Anspruch 1, wobei die bedruckte Schicht ein Zellstoffmaterial umfasst.

4. Vlies nach Anspruch 2, wobei die Zeichen Text oder Grafiken einschließen.

5. Vlies nach Anspruch 1, wobei wenigstens ein Teil der bedruckten Schicht farbig ist.

6. Vlies nach Anspruch 1, wobei die Faserschicht synthetische Fasern umfasst, die aus Stapelfasern gebildet sind.

7. Vlies nach Anspruch 1, wobei die Faserschicht aus Spinnfasern gebildet ist.

8. Vlies nach Anspruch 1, wobei die Faserschicht aus Endlosfasern gebildet ist.

9. Vlies nach einem der vorstehenden Ansprüche, wobei die Faserschicht Polypropylenfasern und Rayonfasern im Verhältnis 3:2 umfasst.

10. Absorptionsprodukt, umfassend:
ein tragbares Kleidungsstück, das eine Absorptionsschicht aufweist, und
das Vlies nach Anspruch 1.

11. Vlies nach Anspruch 1, wobei das Vlies ein Wischtuch ist.

12. Absorptionsprodukt nach Anspruch 10, wobei der Absorptionsartikel eine Windel ist, umfassend:
eine Absorptionsschicht,
eine Faserschicht,
einen Verschluss, der an einer Auftreffzone befestigt werden kann, und
eine bedruckte Schicht, die angrenzend an die Faserschicht angeordnet ist, wobei die bedruckte Schicht Zeichen aufweist, wobei wenigstens ein Teil der Zeichen in der Auftreffzone angeordnet ist,
wobei die bedruckte Schicht durch Wasserstrahlverfestigung an die Faserschicht gebunden ist.

13. Verfahren zur Herstellung eines Vlieses nach den Ansprüchen 1 bis 9, umfassend die folgenden Schritte:
Bereitstellen einer Faserschicht,
Bereitstellen einer Zellstoffschicht, die aufgedruckte Zeichen aufweist,
Positionieren der Zellstoffschicht angrenzend an die Faserschicht und
gemeinsames Führen der Schichten durch ein Wasserstrahlverfestigungssystem, um die Schichten aneinander zu befestigen.

## Revendications

1. Non-tissé formé à partir de plusieurs couches et ayant une couche imprimée et comprenant :
une couche fibreuse ; et
une couche imprimée disposée adjacente à la couche fibreuse ;
dans lequel la couche imprimée est liée à la couche fibreuse par enchevêtrement par voie hydraulique de telle sorte que la couche imprimée n'est pas disposée sur les surfaces externes du non-tissé résultant.

2. Non-tissé selon la revendication 1, dans lequel la couche imprimée comporte une estampille commerciale.

3. Non-tissé selon la revendication 1, dans lequel la couche imprimée comprend un matériau de pâte à papier.

4. Non-tissé selon la revendication 2, dans lequel l'estampille commerciale inclut du texte ou des motifs.

5. Non-tissé selon la revendication 1, dans lequel au moins une partie de la couche imprimée est colorée.

6. Non-tissé selon la revendication 1, dans lequel la couche fibreuse comprend des fibres synthétiques formées de fibres discontinues.

7. Non-tissé selon la revendication 1, dans lequel la couche fibreuse est formée de fibres filées.

8. Non-tissé selon la revendication 1, dans lequel la couche fibreuse est formée de fibres continues.

9. Non-tissé selon l'une quelconque des revendications précédentes, dans lequel la couche fibreuse comprend des fibres de polypropylène et des fibres de rayonne dans un rapport de 3:2.

10. Produit absorbant comprenant :
un vêtement pouvant être porté ayant une couche absorbante ; et
le non-tissé selon la revendication 1.

11. Non-tissé selon la revendication 1, où le non-tissé est une lingette.

12. Produit absorbant selon la revendication 10, dans lequel l'article absorbant est une couche comprenant :
une couche absorbante ;
une couche fibreuse ;
un fermoir pouvant être fixé à une zone de réception ; et
une couche imprimée disposée adjacente à la couche fibreuse, la couche imprimée comportant une estampille commerciale, au moins une partie de l'estampille commerciale étant disposée dans la zone de réception ;
dans lequel la couche imprimée est liée à la couche fibreuse par enchevêtrement par voie hydraulique.

13. Procédé de fabrication d'un non-tissé selon les revendications 1 à 9 comprenant les étapes consistant à :
fournir une couche fibreuse ;
fournir une couche de pâte à papier comportant une estampille imprimée ;
positionner la couche de pâte à papier adjacente à la couche fibreuse ; et
faire passer les couches conjointement à travers un système d'enchevêtrement hydraulique pour fixer les couches l'une à l'autre.
